# EUROPÄISCHE PATENTSCHRIFT

(11) **EP 0 581 301 B1**
(45) Veröffentlichungstag und Bekanntmachung des Hinweises auf die Patenterteilung: **26.05.1999**
(21) Anmeldenummer: 93112246.9
(22) Anmeldetag: 30.07.1993
(51) Int. Cl.: G09F 3/00, G09F 3/02

(54) **Korpus mit einer das maschinelle Lesen von darauf befindlichen Informationen zulassenden Raumform**
Body with three-dimensional shape enabling machine reading of information provided thereon
Corps à forme tridimensionnelle permettant la lecture mécanique d'informations y appliquées

(30) Priorität: 30.07.1992 DE 9210203 U
(43) Veröffentlichungstag der Anmeldung: 02.02.1994
(73) Patentinhaber: Baumann, Werner, Dr., D-44287 Dortmund (DE)
(72) Erfinder: Baumann, Werner, Dr., D-44287 Dortmund (DE)
(74) Vertreter: Henfling, Fritz, Dipl.-Ing.

(56) Entgegenhaltungen:
- FR-A- 2 635 486
- US-A- 5 093 147

## Beschreibung

Die Erfindung betrifft einen Korpus mit einer das maschinelle Lesen von darauf befindlichen Informationen zulassenden Raumform, auf den die Informationen unter Verwendung von unter Einwirkung von Energie aktivierbaren Substanzen aufgetragen sind.

Zumal in Zusammenhang mit dem Bestreben, den in ständig zunehmendem Umfang anfallenden Abfall, was seine Endlagerung betrifft, zu reduzieren, geht man in jüngerer Zeit in verstärktem Umfang dazu über, den Abfall aufzubereiten, so weit der Werkstoff das zuläßt. Voraussetzung für eine einwandfreie Aufbereitung ist allerdings, daß der Abfall nach Werkstoffen getrennt wird, die sodann getrennt der Wiederaufbereitung unter Ausschluß dafür ungeeigneter Bestandteile zugeführt werden. Die Trennung des Abfalls von Hand ist allerdings sehr aufwendig. Verbunden ist damit dann auch eine die Gesundheit beeinträchtigende Belastung des damit befaßten Personals. Anzustreben ist deshalb eine maschinelle Sortierung des Abfalls. Hierfür bedarf es allerdings einer typenspezifischen, maschinenlesbaren Kennzeichnung des Rücklaufgutes, soweit es sich dabei um verbrauchte Produkte, wie beispielsweise Batterien, um entleerte Produktgebinde, wie Flaschen, Kanister und dergleichen, sowie um deren Verpackungen handelt.

Die typenspezifische Kennzeichnung von Produkten, Produkte aufnehmenden Behältern und dafür vorgesehene Verpakkungen stößt aber bei Erzeugern und Händlern unter anderem deshalb auf Zurückhaltung, weil das Anbringen solcher zusätzlicher typenspezifischer Kennzeichen, die unter Umständen dann auch großflächig aufgebracht werden müssen, zu Lasten anderer Informationen und insbesondere dann auch zu Lasten der Werbung geht, die sich auf dem Produkt, dem ein Produkt aufnehmenden Behälter und dann auch auf den dafür vorgesehenen Verpackungen vielfach flächendeckend befinden.

Vor diesem Hintergrund liegt der Erfindung die Aufgabe zugrunde, eine typenspezifische, maschinenlesbare Kennzeichnung von Produkten, ein Produkt enthaltenden Behältern und deren Verpackungen - zusammengefaßt als Korpora bezeichnet - vorgeschlagen, die das maschinelle Sortieren bzw. Trennen von Rücklaufgut, insbesondere Abfall, ohne Fremdhilfe zuläßt.

Die Aufgabe wird erfindungsgemäß mit eine das maschinelle Lesen von darauf befindlichen Informationen zulassende Raumform aufweisenden Korpora gelöst, auf denen die Informationen unter Verwendung von unter Einwirkung von Energie aktivierbaren Substanzen aufgetragen sind, wobei die durch lumineszierende Pigmente organischer Natur oder anorganischer Natur erzeugten typenspezifischen, das maschinelle Sortieren bzw. Trennen von Rücklaufgut bzw. Abfall ermöglichenden Informationen bzw. Markierungen erfindungsgemäß flächendeckend auf den jeweiligen Korpus aufgebracht sind.

In Ausgestaltung können die typenspezifischen Informationen bzw. Markierungen unter Aussparung funktionswesentlicher Bereiche flächendeckend auf den jeweiligen Korpus aufgebracht werden, so bei eine zylindrische Raumform aufweisende Batterien unter Aussparung der Stirnflächen.

Die erfindungsgemäße flächendeckende typenspezifische Markierung eröffnet die angestrebte Möglichkeit der maschinellen Trennung von Rücklaufgut ohne zusätzliche Maßnahmen bzw. Fremdhilfe, da die Lesbarkeit der Markierungen im beim vom Rücklaufgut durchlaufenen Sortierbereich in jedem Falle gewährleistet ist, es bedarf also keiner speziellen Orientierung des Rücklaufguts auf dem den Sortierbereich durchlaufenden Transportband.

Produkte bzw. deren Verpackungen mit maschinenlesbaren, dann auch typenspezifischen Informationen zu versehen, ist der US-A-5,093,147 und der FR-A-2 635 486 zu entnehmen, wobei in der FR-A-2 635 486 dann auch die Verwendung anorganischer Pigmente angesprochen ist. Hierbei handelt es sich allerdings in aller Regel nur um auf einen begrenzten Flächenbereich aufgebrachte Markierungen mit Informationen, etwa den von einer Lesekasse lesbaren Preis der Ware, wobei in jüngerer Zeit dann auch insbesondere für die Kontrolle der Lagerhaltung eine entsprechende Warenkennung vorgesehen sein kann.

Bei der unter der Einwirkung von Energie aktivierbaren Substanz kann es sich um lumineszierende Pigmente organischer oder anorganischer Natur handeln. Möglich ist die Kennzeichnung in Form eines Barcodes oder aber über unterschiedliche Pigmente.

Zur Erleichterung der Sortierung kann beitragen, wenn der Trennung des Rücklaufgutes nach den auf ihm befindlichen Information eine Trennung nach den Abmessungen, wie Höhe und/oder Querschnitt vorausgeht. Eine solche Trennung bereits selektierter Partien kann im übrigen dann auch in Zusammenhang mit der Trennung von Mehrwegprodukten und -gebinden vorgesehen sein, etwa bei auf unterschiedliche Abfüller zurückgehenden Getränkeflaschen, Verpackungsgebinden und dergleichen.

Die erfindungegemäßen Zusatzinformationen müssen dann auch nicht unbedingt allein der Trennung des Rücklaufgutes nach Werkstoffen dienen, diese Informationen können dann auch auf den Hersteller, den Ort und den Zeitpunkt der Herstellung hinweisen sowie Gefahren und Entsorgungshinweise beinhalten. Was die erfindungsgemäße Kennzeichnung von ein Produkt enthaltenden Behältern betrifft, kann es sich dabei insoweit auch um Mehrfachinformationen dergestalt handeln, daß sowohl eine Kennung des Behälters selbst als auch des Behälterinhalts möglich wird.

Werden für das Aufbringen von Zusatzinformationen auf die Produkte, ein Produkt enthaltende Behälter sowie auf deren Verpackung lumineszierende Pigmente verwendet, erfolgt die der Trennung des Rücklaufgutes vorausgehende Auswertung der Zusatzinformationen mit einer anregenden Lichtquelle zweckmäßigerweise in einem Dunkelraum. Soweit erforderlich kann der Lesung der Zusatzinformationen eine Überführung der Produkte, der ein Produkt enthaltenden Behälter, gegebenenfalls auch deren Verpackung in eine die Maschinenlesbarkeit ermöglichende Form vorausgehen. Über an sich bekannte Verknüpfungen ist die maschinelle Trennung von mit den individualiserenden Zusatzinformationen versehenen Produkten, ein Produkt aufnehmenden Behältern und deren Verpackung im Anschluß an die durch die Zusatzinformationen erfolgten Kennungen ohne weiteres möglich.

An dem Rücklaufgut "verbrauchte Batterien" sei die Erfindung ergänzend noch einmal im Detail erläutert.

Batterien, Akkus inbegriffen, sind zusätzlich zu den Herstellerangaben mit Leistungsdaten versehen, Akkus ergänzend mit Ladehinweisen. In eingeschränktem Umfang enthalten sie dann auch unmittelbar lesbare Hinweise auf den Typ des Elementes, also auf den Aufbau der Zelle. Was den Aufbau der Zelle betrifft, gibt es Unterschiede hinsichtlich des für die Elektroden verwendeten Metalls bzw. der dafür verwendeten Metallegierungen, sowie hinsichtlich des Elektrolyten, also der Batterie- bzw. Akkulösung. Soweit von Trockenzellen die Rede ist, handelt es sich dabei um Batterien mit einem eingedickten Elektrolyten. Während die Information über den Aufbau der Zelle für den Verbraucher von eher untergeordneter Bedeutung ist, gewinnt eine solche Information an Bedeutung in Zusammenhang mit dem zunehmenden Recycling von Batterien und Akkus, da es dabei für eine optimale Aufbereitung des Rücklaufgutes einer Sortierung der Batterien und Akkus nach Typen bedarf. Das generelle Aufbringen entsprechender zusätzlicher Informationen auf die Oberfläche der Batterien bzw. Akkus läuft dem Interesse der Industrie zuwider, die die Oberfläche - zur Verfügung steht überwiegend nur die Mantelfläche - für Werbezwecke beansprucht.

Im Sinne der Erfindung werden die Batterien und Akkus mit einer Kennzeichnung des Batterie- bzw. Akkutyps, also des Aufbaus der Zelle versehen, die einerseits nicht auf den Widerstand der Hersteller stößt und andererseits dann auch die maschinelle Sortierung von Rücklaufgut ermöglicht.

Dementsprechend wird auf die elektrische Batterie, den Akku bzw. die Knopfzelle unter Aussparung der elektrischleitenden Bereiche der Batterie eine unter der Einwirkung von Energie aktivierbare, typenspezifische Substanz aufgebracht. Hierfür bieten sich lumineszierende Pigmente organischer oder anorganischer Natur an. Die Substanz kann in die Batterielackierung eingelagert sein, aber auch in einen auf die Batterielackierung aufgetragenen Klarlack. Bei zylindrischen Zellen steht für die Kennzeichnung in erster Linie die Mantelfläche der Zelle zur Verfügung, bei Blockzellen zusätzlich dann auch die Standfläche. Für eine einwandfreie maschinelle Sortierung ist eine unter Aussparung der elektrisch leitenden Bereiche der Zelle flächendeckende Kennzeichnung angeraten. Realisieren läßt sich die Typenkennzeichnung allein schon durch die Zuordnung unterschiedlicher unter der Einwirkung von Energie aktivierbarer Substanzen zu den Zellen, das schließt eine Typenkennzeichnung unter Verwendung ein und derselben unter der Einwirkung von Energie aktivierbaren, nach Art eines Barcodes aufgebrachten Substanz nicht aus. Der Code steht dann auch als Träger für weitere Informationen zur Verfügung. Die erfindungsgemäß erfolgende Typenkennzeichnung beeinträchtigt die Herstellerinteressen nicht, sie eröffnet dann auch die Möglichkeit der maschinellen Sortierung des Rücklaufguts.

In der Zeichnung ist die Realisierung der Erfindung anhand von zwei Batteriekennzeichnungen dargestellt. Es zeigen:
- Figur 1: eine erfindungsgemäß gekennzeichnete Rundzelle,
- Figur 2: eine solche Zelle mit einer speziellen Typenkennzeichnung.

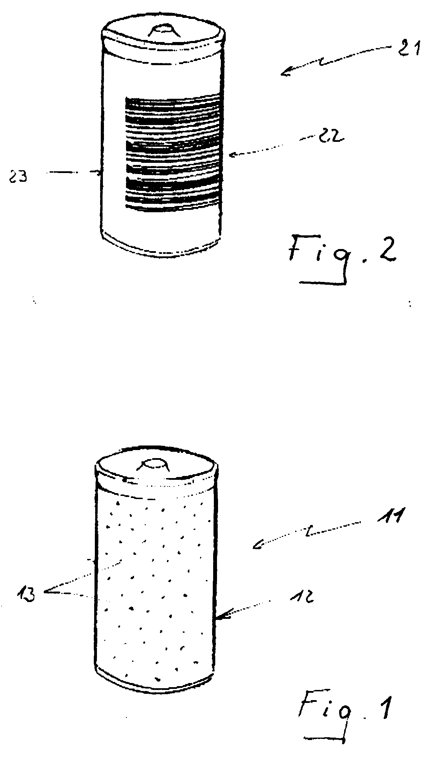

Auf die Mantelfläche 12 der Rundzelle 11 ist flächendeckend ein typenspezifisches Pigment aufgebracht. Das in Klarlack eingelagerte durch die Punkte 13 angedeutete Pigment ist unter Normalbedingungen nicht sichtbar, eröffnet aber unter der Einwirkung von Energie angeregt eine Maschinenlesbarkeit. Bei der Ausführungsform nach Figur 2 ist auf den Umfang der Rundzelle 21 ein Barcode 22 ebenfalls unter Verwendung einer unter der Einwirkung von Energie aktivierbaren Substanz aufgebracht, der über die Angabe des Typs der Zelle hinausgehend weitergehende Informationen zu vermitteln vermag.

## Patentansprüche

1. Korpus mit einer das maschinelle Lesen von darauf befindlichen Informationen zulassenden Raumform, auf den die Informationen unter Verwendung von unter Einwirkung von Energie aktivierbaren Substanzen aufgetragen sind, dadurch gekennzeichnet, daß durch lumineszierende Pigmente organischer Natur oder anorganischer Natur erzeugte typenspezifische, das maschinelle Sortieren (Trennen) von Rücklaufgut ermöglichende Informationen (Markierungen) flächendeckend auf den jeweiligen Korpus aufgebracht sind.

2. Korpus nach Anspruch 1, dadurch gekennzeichnet, daß die typenspezifischen Informationen (Markierungen) unter Aussparung funktionswesentlicher Bereiche flächendeckend auf den Korpus aufgebracht sind.

## Claims

1. Body having a three-dimensional form permitting the mechanical reading of information situated thereon, to which body the information is applied by using substances activatable by the effect of energy, characterised in that type-specific information (markings), produced by luminescent pigments of an organic nature or of an inorganic nature and permitting the mechanical sorting (separation) of recycled material, is applied to the particular body so as to cover the entire surface thereof.

2. Body according to claim 1, characterised in that the type-specific information (markings) is applied to the body, so as to cover the entire surface thereof, whilst avoiding regions essential to operation.

## Revendications

1. Corps présentant une forme spatiale autorisant la lecture mécanique d'informations se trouvant sur celui-ci, sur lequel les informations sont portées par utilisation de substances activables sous l'effet d'énergie, caractérisé en ce que des informations (marquages) spécifiques d'un type, produites par des pigments luminescents de nature organique ou inorganique, et permettant le tri mécanique (séparation) de produits de recyclage, sont appliquées sur le corps considéré de manière à recouvrir complètement sa surface.

2. Corps selon la revendication 1, caractérisé en ce que les informations spécifiques du type (marquages) sont appliquées de manière à recouvrir complètement le corps, en réservant les zones essentielles au fonctionnement.
